# FASCICULE DE BREVET EUROPEEN

(11) **EP 2 303 479 B1**
(45) Date de publication et mention de la délivrance du brevet: **07.03.2012**
(21) Numéro de dépôt: 09746023.2
(22) Date de dépôt: 30.04.2009
(51) Int. Cl.: B09B 3/00, C04B 18/04

(54) **TRAITEMENT ACIDE SOUS FAIBLES TEMPÉRATURE ET PRESSION D'UN DÉCHET CONTENANT DE L'AMIANTE**
SÄUREBEHANDLUNG BEI GERINGER TEMPERATUR UND GERINGEM DRUCK VON ASBESTHALTIGEM ABFALL
ACID TREATMENT, AT LOW TEMPERATURE AND PRESSURE, OF A WASTE CONTAINING ASBESTOS

(30) Priorité: 30.04.2008 FR 0852923
(43) Date de publication de la demande: 06.04.2011
(73) Titulaire: Centre National de la Recherche Scientifique - CNRS, 75016 Paris (FR); Institut National Polytechnique De Toulouse, 31029 Toulouse Cedex 4 (FR); UNIVERSITE PAUL CEZANNE AIX MARSEILLE III, 13628 Aix en Provence Cedex 1 (FR)
(72) Inventeur: CARPENA, Joëlle, F-13490 Jouques (FR); LACOUT, Jean-Louis, F-31000 Toulouse (FR)
(74) Mandataire: Blot, Philippe Robert Emile
(86) Numéro de dépôt international: PCT/FR2009/050804
(87) Numéro de publication internationale: WO 2009/138704

(56) Documents cités:
- WO-A1-88/10234
- WO-A1-93/18867
- DE-A1- 4 411 324
- DE-A1- 19 718 606
- US-A- 5 085 838
- US-A1- 2005 096 495
- US-A1- 2006 111 604

## Description

La présente invention a trait au domaine du désamiantage, et plus spécifiquement à celui du traitement des déchets contenant de l'amiante. Plus précisément, l'invention concerne un nouveau procédé permettant de convertir des fibres d'amiante aciculaires inhalables en une forme non inhalable.

Le terme "amiante", au sens où il est employé au sens de la présente description, s'entend dans son acception la plus large, et vise ainsi des silicates hydratés formés naturellement au cours du métamorphisme de certaines roches et dont un traitement mécanique adéquat fait apparaître les fibres minérales aciculaires. Pour plus de détails à ce sujet, on pourra notamment se reporter à Deer M.A., Howie R.A. et Zusman J., Rock Forming Minerals, vol.2, Ed. Longman (1971).

Le terme "amiante" au sens de la présente description englobe notamment :
- les amiantes de type serpentines, qui se présentent généralement sous la forme de fibres de longueur inférieure ou égale à 40 mm et de diamètre de l'ordre de 0,02 microns, parmi lesquelles on peut citer la chrysotile de formule Mg₃Si₂O₅(OH)₄ (numéro CAS : 12007-29-5) ;
   et
- les amiantes de type amphiboles, qui sont des silicates se présentant généralement sous la forme de fibres de longueur inférieure ou égale à 70 mm et de diamètre de l'ordre de 0,08 à 0,1 microns,et qui englobent notamment :
   - les amiantes de type cummingtonite, qui répondent à la formule générale (Fe,Mg)₇Si₈O₂₂(OH)₂ (numéro CAS: 12172-73-5), comme par exemple les grunérites, également désignées par le terme "amosite" qui est à l'origine une dénomination commerciale donnée à ces amiantes par la compagnie AMOS (*Asbestos Mines of South Africa*) ; et
   - les amiantes de type crocidolite qui répondent à la formule générale Na₂(Fe,Mg)3Al₂Si₈O₂₂(OH)₂ (numéro CAS : 12001-28-4).

Les risques de répercussion grave sur la santé et sur l'environnement de la mise en oeuvre d'amiante, en particulier de type amphibole, sont aujourd'hui connus. Du fait de cette dangerosité reconnue de l'amiante, les exigences légales concernant la manipulation de ce matériau sont devenues de plus en plus sévères, et ce tout particulièrement lorsqu'il s'agit d'amiante à l'état floqué, c'est-à-dire sous la forme de fibres aciculaires uniquement pressées entre elles et laissant passer l'air. De fait, lorsqu'on met en oeuvre des techniques de désamiantage, la zone de désamiantage est généralement sécurisée par mise en oeuvre d'aspirateurs puissants visant à éviter que des fibres puissent être véhiculées par l'air et les opérateurs sont généralement en outre protégés par des scaphandres

Les travaux réalisés sur l'amiante ont montré que des risques liés à l'emploi de ce matériau existent surtout lorsque l'amiante se présente sous la forme de particules inhalables, notamment sous la forme de fibres aciculaires libres, l'inhalation de particules de ce type étant susceptible d'induire des formations fibreuses ou cancéreuses notamment dans le corps humain, pouvant se traduire par l'apparition de maladies de type cancer du poumon ou asbestose. Les pathologies de ce type ont été attribuées à la forme aciculaire des fibres d'amiantes mais également à un effet des ions libérés après dissolution partielle de l'amiante au niveau des tissus vivants.

Compte tenu de ces risques, les déchets contenant de l'amiante sont considérés comme des déchets industriels dangereux, et on a cherché durant ces dernières années à développer des techniques permettant de les confiner ou de les éliminer efficacement. Il est à noter à ce sujet qu'il existe de nombreux déchets de ce type, qui sont essentiellement des amiantes floqués de calorifugeage ou des amiantes-ciments qui étaient utilisés couramment notamment en France, par exemple dans le domaine du bâtiment et des travaux publics, jusqu'à l'interdiction en 1997 de la fabrication et de l'exploitation des produits contenant des fibres d'amiante.

Une première solution qui a été proposée pour la gestion des déchets contenant de l'amiante est celle consistant à stocker les déchets à base d'amiante dans des centres de stockage pour déchets dangereux. Ce confinement est une solution peu satisfaisante, notamment dans la mesure où elle n'implique aucun traitement capable de rendre les déchets inoffensifs et qu'elle conduit de ce fait à une accumulation de déchets dangereux sur un site sensible. De plus, les capacités de stockage dans des centres de stockage ne sont pas illimitées, et elles ont en outre un coût non négligeable.

Une autre solution mise en oeuvre aujourd'hui consiste à réaliser une vitrification des déchets à base d'amiante en portant ces déchets à haute température (de l'ordre de 10 000°C) en employant typiquement une torche à plasma. Une telle vitrification de l'amiante s'avère certes une technique efficace de traitement de l'amiante, car elle conduit à une conversion de tout type d'amiante en un matériau vitrifié non susceptible de libérer des fibres inhalables d'amiante aciculaire. Néanmoins, un inconvénient majeur de cette méthode de vitrification est son coût très élevé, dû à la consommation énergétique très importante liée à l'emploi de la torche à plasma ainsi qu'au coût de mise en place et de maintenance des dispositifs de haute technologie qu'elle implique. De plus, la technique de vitrification de l'amiante a une capacité de traitement relativement réduite (22 tonnes par jour pour la seule installation de ce type existant en Europe, soit 8000 tonnes par an), ce qui est très peu en comparaison des quantités très élevées de déchets à base d'amiante qui sont à traiter aujourd'hui (A titre indicatif, en France, la quantité annuelle de déchets contenant de l'amiante est de l'ordre de 200 000 tonnes d'amiante floqué et 20 millions de tonnes d'amiante-ciment. On a par ailleurs recensé 3000 types de produits contenant de l'amiante (Rapport d'information du Sénat de 2005-2006 de G. Dériot et J.P. Godefroy) et, aujourd'hui, environ 100 millions de m² des bâtiments français sont encore amiantés).

D'autres solutions que la vitrification ont été envisagées pour traiter des déchets à base d'amiante, qui se sont toutefois révélées inapplicables en pratique, ou moins efficaces que la vitrification.

Ainsi, il a par exemple été proposé de détruire la structure aciculaire des fibres de l'amiante en soumettant ces fibres à un broyage intensif visant à induire une amorphisation de l'amiante.

D'autre part, il a été proposé de réaliser une attaque acide de l'amiante dans le but de solubiliser ses fibres aciculaires.

Dans ce cadre, une méthode radicale consiste en une attaque acide de l'amiante par de l'acide fluorhydrique concentré. Certes cette attaque se révèle très efficace, mais elle n'est envisageable qu'à l'échelle du laboratoire. En effet, la toxicité et les risques liés à l'emploi de l'acide fluorhydrique interdisent sa mise en oeuvre industrielle.

L'emploi d'autres acides que l'acide fluorhydrique précité a été proposé, mais une attaque par ces autres acides s'avère généralement inefficace pour traiter la plupart des amiantes. Ainsi, par exemple, il est par exemple décrit dans WO97/27902 un traitement de dissolution de l'amiante par de l'acide chlorhydrique additionné d'ions potassium et éventuellement d'autres acides, à des températures de l'ordre de 30 à 95°C. Le procédé décrit dans ce document peut certes s'avérer efficace avec certains types d'amiantes, notamment les amiantes de type chrysotile, mais il s'avère le plus souvent inadapté pour le traitement des amiantes de type amphiboles (notamment les cummingtonites (les amosites spécialement) et les crocidolites), et ce tout particulièrement lorsqu'il s'agit d'amiantes floqués. De nombreuses publications établissent en fait que l'attaque acide de l'amiante reste en régie générale très limitée à la surface des fibres aciculaires de l'amiante, en particulier lorsqu'il s'agit d'amiante de type amphibole, ce qui semble s'expliquer par la formation d'un gel de surface qui empêcherait l'attaque du coeur des fibres d'amiante. Pour plus de détails à ce sujet, on pourra notamment se reporter à *"*Dissolution of fibrous silicates in acid and buffered salt solutions", Allen M.P. and Smith R.W., Minerals Engineering; vol.7, 1527-1537 (1994).

Le document WO 88/10234 décrit un procédé de traitement d'un déchet contenant de l'aminate, dans lequel on dissout l'amiante contenu dans ledit déchet avec un acide sulfurique.

Ainsi, il ressort qu'il existe aujourd'hui un besoin d'un procédé efficace et peu onéreux permettant de convertir de façon efficace les fibres d'amiante aciculaires inhalables sous une forme non inhalable, et ce pour tous les types d'amiante, et notamment pour les amiantes de type amphibole comme la cummingtonite ou la crocidolite.

Un but de la présente invention est de fournir un tel procédé.

A cet effet, la présente invention a pour objet un procédé de traitement d'un déchet contenant de l'amiante, comprenant une étape (E) dans laquelle on dissout l'amiante contenu dans ledit déchet, en faisant réagir ce déchet avec un acide autre que l'acide fluorhydrique à une température d'au moins 125°C et à une pression supérieure à 0,2 MPa (c'est-à-dire à une pression d'au moins 2 bar), et dans lequel :
- l'amiante comprise dans le déchet traité est une amiante de type amphibole.

Selon un mode de réalisation avantageux, l'étape (E) du procédé de l'invention est conduite en plaçant un mélange contenant le déchet à traiter et une solution aqueuse de l'acide autre que l'acide fluorhydrique au sein d'une enceinte autoclave, et en portant cette autoclave à une température supérieure à 125°C. Dans ces conditions, la pression au sein de l'enceinte enceinte autoclave atteint au moins la pression de la vapeur d'eau à la température considérée, et donc *de facto* une valeur d'au moins 0,2 MPa : en effet, en opérant de la sorte, on atteint une pression de 0,24 MPa lorsque la température est de 125°C et la pression augmente avec la température (à titre indicatif, la pression est de 1,55 MPa (soit 15,5 bar) pour une température de 200°C, et de 4 MP a (soit 40 bar pour une température de 250°C).

Préférentiellement, dans l'étape (E) du procédé de l'invention, la température de réaction du déchet et de l'acide est supérieure ou égale à 150°C, et plus préférentiellement encore supérieure ou égale à 170°C.

Par ailleurs, il est le plus souvent avantageux que la pression à laquelle est conduite la réaction du déchet et de l'acide dans l'étape (E) soit supérieure ou égale à 0,5 MPa (c'est-à-dire supérieure ou égale à 5 bar) et plus préférentiellement encore supérieure ou égale à 0,8 MPa (c'est-à-dire supérieure ou égale à 8 bar).

Dans le cadre des travaux qui ont conduit à la présente invention, les inventeurs ont maintenant découvert de façon tout à fait inattendue que, lorsqu'on traite de l'amiante par un acide dans les conditions spécifiques de température et de pression précitées, on obtient une dissolution substantielle de l'amiante par l'acide, ce qui permet, en employant une quantité suffisante d'acide, de dissoudre la totalité de l'amiante présent dans un déchet amiante, et ce que l'amiante employé soit de type serpentine ou amphibole. De plus, la dissolution se révèle efficace aussi bien avec les déchets contenant de l'amiante floqué qu'avec des déchets contenant de l'amiante-ciment. Dans tous les cas, la dissolution se révèle en outre se dérouler avec une cinétique suffisamment élevée, compatible avec une mise en oeuvre industrielle du procédé.

Ces résultats s'avèrent tout particulièrement surprenants au vu des études réalisées jusqu'à présent sur la dissolution de l'amiante en milieu acide, qui laissaient plutôt supposer que l'attaque acide de l'amiante par un autre acide que l'acide fluorhydrique est une réaction par nature incomplète, notamment lorsque l'amiante est de type amphibole.

Au contraire, les inventeurs ont maintenant mis en évidence qu'on peut en fait effectuer une dissolution de la totalité de l'amiante contenu dans un déchet par un acide autre que l'acide fluorhydrique, y compris lorsque cet amiante est de type amphibole, et ce simplement en conduisant la réaction de l'acide avec l'amiante à une température et à une pression suffisantes.

Dans ce cadre, de façon encore plus surprenante, il s'avère que les températures et pression adaptées à une dissolution acide totale de l'amiante n'ont pas besoin d'être très élevées, ce qui se traduit notamment par un coût de procédé relativement réduit et facilite de ce fait une mise en oeuvre à grande échelle du procédé.

Ainsi, dans le cas le plus général, la réaction du déchet avec l'acide dans l'étape (E) peut avantageusement être conduite à une température inférieure ou égale à 300°C, par exemple entre 180°C et 250°C et notamment entre 200 et 220°C (des températures plus élevées ne sont certes pas exclues dans le cadre de l'invention, mais elles ne s'imposent en rien pour atteindre le résultat recherché).

De même, la réaction du déchet avec l'acide dans l'étape (E) peut être conduite à une pression qui n'a généralement pas à dépasser 5MPa (50 bar), cette pression étant avantageusement comprise entre 1 et 4 MPa (à savoir entre 10 et 40 bars).

Les inventeurs ont en outre mis en évidence que la dissolution de l'amiante peut être atteinte très aisément dans les conditions de l'invention sans avoir nécessairement pour ce faire à mettre en oeuvre un acide concentré.

Ainsi, la mise en oeuvre du procédé de l'invention permet une conversion extrêmement simple, rapide et efficace de fibres d'amiante, initialement susceptibles d'être inhalées, en un composé transformé, différent de l'amiante de départ, et ne contenant plus de particules inhalables, et ce avec un coût énergétique extrêmement réduit. Le procédé de l'invention constitue de ce fait une alternative très avantageuse au procédé de vitrification actuellement préconisé pour le traitement des amiantes.

En outre, contrairement au procédé de vitrification mis en oeuvre aujourd'hui pour traiter l'amiante, qui conduit à de l'amiante vitrifié qui est un matériau très peu intéressant et de faible valeur (l'application principale (voire unique) de l'amiante vitrifié est son emploi à titre de sous couche de revêtement routier), le procédé de la présente invention conduit, lui, à une solution (S) issue de l'amiante qui est valorisable en tant que telle. Avantageusement, dans le procédé de l'invention, cette solution (S) est valorisée en tant que telle.

Plus précisément, les inventeurs ont en effet maintenant mis en évidence que la solution (S) issue de la dissolution de l'amiante telle qu'obtenue à l'issue de l'étape (E) du procédé de l'invention peut notamment être employée pour récupérer un ou plusieurs des éléments contenus dans cette solution (Mg, Al et/ou Fe, en particulier), notamment sous forme :
- de sels de l'acide employé pour effectuer l'attaque acide de l'étape (E) (par exemple sous la forme de chlorures obtenus directement dans la solution (S) lorsqu'on emploie de l'acide chlorhydrique dans l'étape (E) ; ou
- sous la forme d'hydroxydes obtenus par exemple en ajoutant une base forte de type soude ou potasse dans la solution (S) ; ou
- sous la forme de minéraux du fer.

En particulier, il est ainsi possible de récupérer à partir de la solution (S) des sels ou hydroxydes de magnésium, cette récupération du magnésium s'avérant tout particulièrement avantageuse compte tenu du prix croissant du magnésium fortement demandé en particulier dans l'industrie métallurgique.

Plus spécifiquement, les inventeurs ont par ailleurs mis en évidence que la solution (S) issue de la dissolution de l'amiante lors de l'étape (E) peut, selon un mode de réalisation avantageux, être utilisée pour synthétiser une apatite à partir de l'amiante contenue initialement dans le déchet. A cet effet, le procédé de l'invention comprend alors avantageusement les étapes (E1) et (E2) suivantes à l'issue de l'étape (E) :
(E1) on introduit des ions phosphate PO₄³⁻ et des ions calcium Ca²⁺ à la solution d'amiante (S) obtenue à l'issue de l'étape (E), ce qui peut être réalisé très simplement, à savoir :
   - soit en ajoutant dans la solution (S) après l'étape (E) :
      - un mélange d'un composé contenant des ions phosphate et un composé contenant des ions calcium ; ou
      - un phosphate de calcium (par exemple du phosphate tricalcique TCP),
   - soit, plus préférentiellement, en introduisant initialement dans le milieu réactionnel, avant la mise en oeuvre de l'étape (E) :
      - un mélange d'un composé contenant des ions phosphate et un composé contenant des ions calcium ; ou
      - un phosphate de calcium (comme du phosphate tricalcique),
   les ions phosphates et les ions calcium ainsi introduits étant alors conservés lors de l'étape (E) et se retrouvant *in fine* dans la solution (S). (Il est à noter à ce sujet que l'ajout des ions phosphate et calcium Ca²⁺ avant la mise en oeuvre de l'étape (E) est techniquement plus intéressante qu'un ajout ultérieur notamment car elle supprime une étape d'ajout et de mélange. De plus, elle permet de dissoudre le phosphate lors d'une réaction unique dans l'étape (E). En outre, et de façon surprenante, il a été observé de façon plus fondamentale par les inventeurs que l'ajout des ions phosphate et calcium Ca²⁺ avant la mise en oeuvre de l'étape (E) plutôt qu'après conduit à une augmentation de la cinétique de la réaction de dissolution de l'amiante dans l'étape (E)) ; puis
(E2) on basifie la solution (S) additivée de phosphate et de calcium issue de l'étape (E1), ce par quoi on obtient la précipitation d'une apatite.

Dans ce cadre, l'invention fournit ainsi un nouveau procédé de préparation d'une apatite silicatée qui constitue, selon un aspect particulier, un autre aspect spécifique et particulièrement intéressant de la présente invention.

Le procédé de préparation d'apatite silicatée de l'invention comprenant les étapes (E1) et (E2) précitées s'avère tout particulièrement intéressant lorsque le déchet traité dans l'étape (E) comprend de l'amiante de type amphibole. En effet, dans ce cas, le procédé conduit à une apatite silicatée contenant des cations fer, du type de celle décrite par exemple dans les demandes internationales WO 95/02886 ou WO 00/15546, qui s'avère utile notamment à titre d'agent de piégeage de l'arsenic ou de métaux lourds comme Pb, Cd, U, Pu, Th ou Cr, une telle apatite silicatée contenant du fer pouvant par exemple être employée pour la décontamination de sols ou d'eaux usées contaminées par des ions lourds, ou pour le piégeage de métaux lourds, notamment d'uranium ou de plutonium, notamment lorsqu'il s'agit d'apatites du type de celles décrites dans WO 00/15546.

Selon un mode de réalisation intéressant, lorsque le procédé de l'invention comporte les étapes (E1) et (E2) de valorisation de la solution (S) issue de l'étape (E), les ions phosphate et les ions calcium Ca²⁺ peuvent avantageusement être introduits dans l'étape (E1) sous la forme d'un produit issu de la calcination d'une farine animale. Dans ce cas, le procédé de l'invention s'avère tout particulièrement intéressant du point de vue du traitement des déchets : il permet en effet de traiter conjointement deux déchets dangereux (à savoir un déchet comprenant de l'amiante d'une part et une farine animale d'autre part) pour les convertir en un matériau d'intérêt, à savoir une apatite, qui s'avère elle-même capable de décontaminer des sols ou des eaux polluées ou de confiner d'autres déchets nocifs ou dangereux, et ce tout particulièrement lorsque l'amiante contenu dans le déchet de départ est une amiante de type amphibole.

Le procédé de l'invention présente de préférence une ou plusieurs des caractéristiques préférentielles suivantes.

Dans l'étape (E), l'acide mis en oeuvre comprend de préférence de l'acide chlorhydrique ou l'acide sulfurique. Plus préférentiellement, cet acide est de l'acide chlorhydrique, de l'acide sulfurique ou un mélange de ces acides. De façon particulièrement avantageuse, il s'avère le plus souvent préférable d'employer de l'acide chlorhydrique, en particulier lorsqu'on met en oeuvre les étapes (E1) et (E2). L'invention n'est toutefois pas limitée à la mise en oeuvre de ces acides particuliers et on peut conduire la dissolution acide de l'étape (E) en mettant en oeuvre d'autres acides, de préférence des acides forts autres que l'acide fluorhydrique. Dans l'étape (E), le plus souvent, le milieu réactionnel ne contient pas d'acide fluorhydrique. La mise en oeuvre d'acide fluorhydrique conjointement à l'acide de l'étape (E) n'est toutefois pas exclue, quoiqu'elle ne soit généralement pas souhaitable. Par ailleurs, l'acide employé dans l'étape (E) est préférentiellement mis en oeuvre sous la forme d'une solution aqueuse. De façon plus générale, il est par ailleurs le plus souvent souhaitable que le milieu réactionnel de l'étape (E) contienne de l'eau.

D'autre part, dans l'étape (E), le rapport molaire acide/amiante est de préférence supérieur à 1 :1, et est plus préférentiellement entre 1,2 :1 et 1,8 :1. La durée de l'étape (E) est à adapter notamment en fonction de ce rapport et de la nature exacte de l'amiante traitée. Dans le cas le plus général, une dissolution totale de l'amiante contenue initialement dans le déchet ne nécessite pas une réaction dépassant 100h et elle est le plus souvent obtenue en moins 50h. Avantageusement, cette durée est d'au moins 1 h, de préférence d'au moins 2h et elle est typiquement de l'ordre de 5 à 50h.

Différents aspects et avantages de l'invention ressortiront encore davantage au vu des exemples illustratifs exposés ci-après.

### EXEMPLE 1

### Dissolution d'une amiante de type amosite par de l'acide chlorhydrique

Dans une enceinte autoclave, on a introduit 2500 mL d'une solution aqueuse d'acide chlorhydrique 1 N, où on a ensuite placé 2 g d'amiante floqué de type amosite de formule Fe_{5.66}Mg_{1,47}Si₈O₂₂(OH)₂.

L'enceinte autoclave a été fermée puis placée dans une étuve dont la température a été programmée comme suit :
- montée en température de la température ambiante (25°C) à 200°C en 60 minutes;
- maintien de la température à 200°C pendant 48 heu res (A cette température, la pression au sein de l'enceinte autoclave est portée à 15,5 bar (1,55 MPa)

A l'issue des 48 heures de traitement à 200°C, on a retiré l'enceinte autoclave de l'étuve et on l'a laissée refroidir à température ambiante (25°C) pendant une durée d'environ une heure (la pression à l'intérieur de l'autoclave redescendant de ce fait à la pression atmosphérique (1 bar)).

On a ainsi obtenu une dissolution totale de l'amiante : à l'issue du traitement, on obtient en effet dans l'enceinte autoclave une solution aqueuse (S1) exempte de toute phase solide. La solution obtenue apparaît parfaitement limpide lors d'une observation visuelle simple. L'observation à la binoculaire à un grossissement x 500 confirme qu'il n'existe plus aucune phase solide et en particulier aucune fibre résiduelle

Ainsi, dans la solution (S1) obtenue, l'amiante n'existe plus sous sa forme minéralogique initiale : elle a été totalement dissoute et se trouve sous forme ionique totalement dissociée. II n' y a donc plus en particulier de présence de la structure fibreuse responsable des atteintes à la santé humaine et à l'environnement de l'amiante floqué initial.

### EXEMPLE 2

### Conversion d'une amiante de type amosite en une apatite au fer (dissolution acide de l'amiante puis valorisation de la solution obtenue)

On a reproduit la dissolution acide de l'exemple 1, à la différence qu'on a ajouté dans l'autoclave 20 g de phosphate de calcium (phosphate tricalcique TCP en poudre) en plus des 2500 mL de solution d'acide chlorhydrique et des 2 g d'amosite avant la mise en oeuvre du traitement thermique.

Après un traitement thermique à 200°C similaire à celui de l'exemple 1 puis refroidissement libre jusqu'à température ambiante (et retour de la pression à 1 bar) pendant environ 1 heure, on a obtenu, par dissolution acide de l'amiante, une solution (S2) exempte de toute phase solide. Là encore, la solution obtenue apparaît parfaitement limpide lors d'une observation visuelle, et l'observation à la binoculaire à un grossissement x 500 confirme qu'il n'existe plus aucune phase solide et en particulier aucune fibre résiduelle.

La solution (S2) ainsi obtenue a été introduite goutte à goutte dans 5000 mL d'une solution aqueuse de soude 1 N, ce par quoi on a obtenu une précipitation très rapide d'une poudre rougeâtre constituée d'apatite associée à des d'oxydes et hydroxydes de fer (cette apatite est utile notamment comme agent de piégeage de l'arsenic ou de métaux lourds comme Pb, Cd, U, PU, Th ou Cr).

Des résultats similaires sont obtenus en mettant en oeuvre d'autres phosphates de calcium que le TCP mis en oeuvre dans le présent exemple (notamment avec des hydroxyapatite, fluoroapatite ou carbonate-apatite ou bien encore avec des résidus d'incinération de farines animales).

## Revendications

1. Procédé de traitement d'un déchet contenant de l'amiante, comprenant une étape (E) dans laquelle on dissout l'amiante contenue dans ledit déchet en faisant réagir ce déchet avec un acide autre que l'acide fluorhydrique à une température d'au moins 125°C et à une pression supérieure à 0,2 MPa, et dans lequel l'amiante comprise dans le déchet traité est une amiante de type amphibole.

2. Procédé selon la revendication 1, où l'étape (E) est conduite en plaçant un mélange contenant le déchet à traiter et une solution aqueuse de l'acide autre que l'acide fluorhydrique au sein d'une enceinte autoclave, et en portant cette autoclave à une température supérieure à 125°C.

3. Procédé selon la revendication 1 ou 2, où, dans l'étape (E), la température de réaction du déchet avec l'acide est supérieure ou égale à 150°C.

4. Procédé selon la revendication 3, où, dans l'étape (E), la température de réaction du déchet avec l'acide est comprise entre 180°C et 250°C.

5. Procédé selon l'une des revendications 1 à 4, où, dans l'étape (E), la pression à laquelle est conduite la réaction du déchet et de l'acide est supérieure ou égale à 0,5 MPa.

6. Procédé selon la revendication 6, où, dans l'étape (E), la pression à laquelle est conduite la réaction du déchet et de l'acide est comprise entre 1 et 4 MPa.

7. Procédé selon l'une des revendications 1 à 6, où l'acide employé dans l'étape (E) comprend de l'acide chlorhydrique ou de l'acide sulfurique.

8. Procédé selon la revendication 7, où l'acide employé dans l'étape (E) est l'acide chlorhydrique.

9. Procédé selon l'une des revendications 1 à 8, où, dans l'étape (E), le rapport molaire acide/amiante est supérieur à 1 :1. et est de préférence entre 1,2 :1 et 1.8:1.

10. Procédé selon l'une des revendications 1 à 9, où, suite à l'étape (E), on récupère un ou plusieurs des éléments Mg, Al et/ou Fe contenus dans la solution (S) issue de la dissolution de l'amiante.

11. Procédé selon l'une des revendications 1 à 9, permettant la synthèse d'une apatite silicatée à partir de l'amiante contenue initialement dans le déchet, qui comprend les étapes suivantes à l'issue de l'étape (E) :
(E1) on introduit des ions phosphate PO₄³⁻ et des ions calcium Ca²⁺ à la solution (S) obtenue à l'issue de l'étape (E) ; puis
(E2) on basifie la solution (S) additivée de phosphate et de calcium issue de l'étape (E1), ce par quoi on obtient la précipitation d'une apatite.

12. Procédé selon la revendication 11, où, dans l'étape (E1), l'introduction des ions phosphate et des ions calcium est effectuée en introduisant initialement dans le milieu réactionnel, avant la mise en oeuvre de l'étape (E) :
- un mélange d'un composé contenant des ions phosphate et un composé contenant des ions calcium ; ou
- un phosphate de calcium (comme du phosphate tricalcique),
ce par quoi les ions phosphates et les ions calcium ainsi introduits sont conservés lors de l'étape (E) et se retrouvent *in fine* dans la solution (S).

13. Procédé selon la revendication 11 ou 12, où l'amiante initialement contenue dans le déchet traité dans l'étape (E) est une amiante de type amphibole, ce par quoi on obtient à l'issue de l'étape (E2) une apatite silicatée contenant du fer.

14. Procédé selon l'une des revendications 11 à 13, où, dans l'étape (E1), les ions phosphate et les ions calcium sont introduits sous la forme d'un produit issu de la calcination d'une farine animale.

## Claims

1. A process for treating waste containing asbestos, comprising a step (E) wherein the asbestos contained in said waste is dissolved by reacting this waste with an acid other than hydrofluoric acid at a temperature of at least 125°C and at a pressure above 0.2 MPa, and wherein the asbestos comprised in the treated waste is asbestos of the amphibole type.

2. The process according to claim 1, wherein step (E) is conducted by placing a mixture containing the waste to be treated and an aqueous solution of the acid other than hydrofluoric acid within an autoclave enclosure, and by bringing this autoclave to a temperature above 125°C.

3. The process according to claim 1 or 2, wherein, in step (E), the reaction temperature of the waste with the acid is greater than or equal to 150°C.

4. The process according to claim 3, wherein, in step (E), the reaction temperature of the waste with the acid is comprised between 180°C and 250°C.

5. The process according to any of claims 1 to 4, wherein, in step (E), the pressure at which the reaction of the waste and of the acid is conducted, is greater than or equal to 0.5 MPa.

6. The process according to claim 5, wherein, in step (E), the pressure at which the reaction of the waste and of the acid is conducted, is comprised between 1 and 4 MPa.

7. The process according to any of claims 1 to 6, wherein the acid used in step (E) comprises hydrochloric acid or sulfuric acid.

8. The process according to claim 7, wherein the acid used in step (E) is hydrochloric acid.

9. The process according to any of claims 1 to 8, wherein, in step (E), the acid/ asbestos molar ratio is greater than 1:1, and is preferably between 1.2:1 and 1.8:1.

10. The process according to any of claims 1 to 9, wherein, following step (E), one or more of the elements Mg, Al and/or Fe contained in the solution (S) are recovered from the dissolution of asbestos.

11. The process according to any of claims 1 to 9, allowing the synthesis of silicate apatite from the asbestos initially contained in the waste, which comprises the following steps after step (E):
(E1) phosphate PO₄³⁻ ions and calcium Ca²⁺ ions are introduced into the solution (S) obtained at the end of step (E); and then
(E2) the solution (S) with phosphate and calcium additives from step (E1) is basified, whereby precipitation of an apatite is obtained.

12. The process according to claim 11, wherein, in step (E1), the introduction of the phosphate ions and of calcium ions is carried out by initially introducing into the reaction medium, before applying step (E):
- a mixture of a compound containing phosphate ions and of a compound containing calcium ions; or
- a calcium phosphate (like tricalcium phosphate),
whereby the thereby introduced phosphate ions and calcium ions are retained during step (E) and are again found *in fine* in the solution (S).

13. The process according to claim 11 or 12, wherein the asbestos initially contained in the waste treated in step (E) is an asbestos of the amphibole type, whereby at the end of step (E2) a silicate apatite containing iron is obtained.

14. The process according to any of claims 11 to 13, wherein, in step (E1), the phosphate ions and the calcium ions are introduced as a product from the calcination of animal meal.

## Patentansprüche

1. Verfahren zur Behandlung eines asbesthaltigen Abfalls umfassend einen Schritt (E), in welchen das Asbest, welches in dem Abfall enthalten ist, gelöst wird, indem dieser Abfall mit einer Säure, welche verschieden von Flusssäure ist, bei einer Temperatur von mindestens 125 °C und einem Druck oberhalb von 0,2 MPa zur Reaktion gebracht wird und bei dem das Asbest, welches in dem behandelten Abfail umfasst ist, ein Asbest vom Amphibol-Typ ist.

2. Verfahren nach Anspruch 1, bei dem der Schritt (E) so durchgeführt wird, dass eine Mischung, welche den zu behandelnden Abfall und eine wässrige Lösung der Säure, welche verschieden von Flusssäure ist, enthält, im Inneren eines Autoklavengefäßes platziert wird und dass dieser Autoklav auf eine Temperatur oberhalb von 125 °C gebracht wird.

3. Verfahren nach Anspruch 1 oder 2, bei dem im Schritt (E) die Reaktionstemperatur des Abfalls mit der Säure oberhalb von oder gleich 150 °C ist.

4. Verfahren nach Anspruch 3, bei dem im Schritt (E) die Reaktionstemperatur des Abfalls mit der Säure zwischen 180 °C und 250 °C liegt.

5. Verfahren nach einem der Ansprüche 1 bis 4, bei dem im Schritt (E) der Druck, bei dem die Reaktion des Abfalls und der Säure durchgeführt wird, oberhalb von oder gleich 0,5 MPa ist.

6. Verfahren nach Anspruch 5, bei dem im Schritt (E) der Druck, bei dem die Reaktion des Abfalls und der Säure durchgeführt wird, zwischen 1 und 4 MPa liegt.

7. Verfahren nach einem der Ansprüche 1 bis 6, bei dem die Säure, die im Schritt (E) verwendet wird, Chlorwasserstoffsäure oder Schwefelsäure umfasst.

8. Verfahren nach Anspruch 7, bei dem die Säure, die im Schritt (E) verwendet wird, Chlorwasserstoffsäure ist.

9. Verfahren nach einem der Ansprüche 1 bis 8. bei dem im Schritt (E) das molare Verhältnis Säure/Asbest oberhalb von 1:1, bevorzugt zwischen 1,2:1 und 1,8:1 liegt.

10. Verfahren nach einem der Ansprüche 1 bis 9, bei dem im Anschluss an den Schritt (E) eines oder mehrere der Elemente Mg, Al und/oder Fe, welche in der Lösung (S) nach dem Auflösen des Asbests enthalten sind, wiedergewonnen werden.

11. Verfahren nach einem der Ansprüche 1 bis 9, welche die Synthese eines Silikatapatits aus dem Asbest, welches anfänglich im Abfall enthalten ist, ermöglicht, welche die folgenden Schritte nach dem Schritt (E) umfasst:
(E1) Einführung von Phosphationen PO₄³⁻ und Calciumionen Ca²⁺ in die Lösung (S), welche nach dem Schritt (E) erhalten wird; darauf
(E2) Alkalisieren der Lösung (S), welche mit Phosphat und Calcium nach dem Schritt (E1) versetzt ist, wodurch die Ausfällung eines Apatits erhalten wird.

12. Verfahren nach Anspruch 11, bei dem im Schritt (E1) die Einführung der Phosphationen und Calciumionen vorgenommen wird, indem anfänglich in das Reaktionsmedium vor der Umsetzung des Schrittes (E)
- eine Mischung einer Verbindung, welche Phosphationen enthält, und einer Verbindung, welche Calciumionen enthält; oder
- ein Calciumphosphat (wie Calciumtriphosphat),
eingeführt wird, wodurch die Phosphationen und die Calciumionen, welche so eingeführt wurden, beim Schritt (E) erhalten bleiben und sich am Ende in der Lösung (S) wiederfinden.

13. Verfahren nach Anspruch 11 oder 12, bei dem das Asbest, welches anfänglich in dem in Schritt (E) behandelten Abfall enthalten ist, ein Asbest vom Amphibol-Typ ist, wodurch nach Schritt (E2) ein Silikatapatit, weiches Eisen enthält, erhalten wird.

14. Verfahren nach einem der Ansprüche 11 bis 13, bei dem im Schritt (E1) die Phosphationen und die Calciumionen in Form eines Produktes, welches durch die Calcination eines Tiermehls erhalten wurde, eingeführt werden.
